# EUROPEAN PATENT SPECIFICATION

(11) **EP 3 061 670 B1**
(45) Date of publication and mention of the grant of the patent: **18.04.2018**
(21) Application number: 16157858.8
(22) Date of filing: 29.02.2016
(51) Int. Cl.: B62D 5/12, B62D 7/14, B62D 13/04

(54) **DEVICE FOR APPLYING STEERING TO A CASTOR PIVOT STEERED WHEEL SET OF A SEMI-TRAILER**
VORRICHTUNG ZUM AUFBRINGEN EINER LENKUNG AUF EINEN LENKROLLENSATZ EINES SATTELAUFLIEGERS
DISPOSITIF POUR L'APPLICATION D'UNE DIRECTION À UN ENSEMBLE DE ROUES DIRECTIONNELLES DE PIVOTEMENT D'UN SEMI-REMORQUE

(30) Priority: 27.02.2015 NL 2014361
(43) Date of publication of application: 31.08.2016
(73) Proprietor: Broshuis B.V., 8263 AD Kampen (NL)
(72) Inventor: Broshuis, Balthasar Johannes Petrus, 1251 LK Laren (NL)
(74) Representative: Van Breda, Jacobus

(56) References cited:
- EP-A1- 2 209 695
- WO-A1-2009/046246
- WO-A1-2013/186063

## Description

The invention relates to a device for applying a steering angle to a wheel set of a semi-trailer wherein the wheel set belongs to one axle, real axle or in case of independent suspension imaginary axle, and is steered by a castor pivot steering arrangement, comprising a pivot steer axle offset to the front of the semi-trailer with respect to a wheel hub centre line. It should be noted that in the case of an independent wheel suspension there is no physical axle between the wheels at the left and right sides of the semi-trailer. In that case an imaginary axle is meant and this case is also included in the invention.

International patent application publication number WO2013186063 discloses the preamble of claim 1 and shows a steering arrangement, a restoring part and a steering system, particularly for commercial vehicles and trailers thereof, comprising a tie bar unit, an actuating unit and a lever element. The lever element is fixed in a pivotable manner at a first turning point immovably disposed in a reference system. The actuating unit has a restoring part, an active part and a damping and is secured against displacement along a transverse axis relative to the reference system, at least one of the parts exerting a force on the tie rod unit to displace the tie rod unit along the transverse axis or to secure it against displacement. The tie rod unit is pivotably fixed at a second turning point on the lever element and therefore displacement of the tie rod unit along the transverse axis leads to a pivoting movement of the lever element about the first turning point.

European patent application publication number EP 2209695 discloses a steering system for a utility vehicle, wherein the steering movement is transmitted to the utility vehicle wheels via a steering linkage provided on a steering unit. The steering unit is arranged so as to be displaceable along a guide unit which is fixed relative to the utility vehicle. A displacing force upon the steering unit may be provided by a hydraulic cylinder arrangement integrated into the steering unit and/or by a mechanical coupling to a steering wheel for example.

Castor pivot steered wheel sets are known on semi-trailers. The castor is created by shifting forward the pivot steer axle with respect to the wheel hub centre line. The steering action is then created by centrifugal force when the trailer is following a curved path. However unintended steering is also possible, for instance when the trailer would be positioned on the sideways sloping road, in which case gravity would invoke steering. To avoid such undesirable steering actions of such steerable axles, such axles are only allowed on semi-trailers in combination with a non-steered axle. The non-steered axle then ensures the stability of the trailer in straight ahead driving. There are however situations in which it clearly would be of advantage to have more steer applied to an axle then is naturally provided by a centrifugal force. This is notably the case when speeds are rather low and hence the centrifugal force hardly exists. Also when reversing and trying to manoeuvre the semi-trailer in a confined area there is no help from steering from a castor pivot steered wheel set.

At present there are no devices known capable of applying steering to a castor pivot steered wheel set on special occasions and in particular under control of e.g. the driver of the truck that moves the semi-trailer. A device according to claim 1 of the present invention provides such a required steering. The driver of the truck moving the semi-trailer is then able to input the required amount of steering via the operator interface to the control means, which powers the slide accordingly to move along the guiding element of the base in the appropriate direction in order to force the wheel set to a steering angle by means of the two steering rods that force the steering arm to makes the wheels rotate in the appropriate direction and to the required amount of steering. An operator interface can for instance comprise a joystick and/or one or more push buttons to be used by the driver in controlling the amount of steer applied.

In a semi-trailer usually there is availability of hydraulic power, pneumatic power and electrical power. Although each of these can be envisioned to be used for powering the slide in an appropriate way, the compact way in which hydraulic power of relatively high levels can be provided to a device according to the invention makes this a preferred embodiment.

In an even more preferred embodiment of the device according to the invention the slide is guided along a guide rail, essentially parallel to the guiding element of the base, comprising at least one spring that at one end is abutted to the guide rail and with the opposing end is progressively compressed by the slide in relation to the amount of steer applied by the device. In this embodiment the spring will return the steering wheel to a neutral position once the power is taken off the slide and thus provides for an automatic return of the steered wheels of the semi-trailer. It may be necessary that the wheels of the trailer start moving before the wheels can be pushed back to their neutral position. This will depend on the friction between the tires of the wheels and the road. Anyway, the steering action can be considered to be no longer existent. This can be achieved for instance by having one spring at each side of the guide rail such, that one spring is compressed when left steer is applied and another spring is compressed when right steer is applied. It is however also possible to use only one spring, in a central position such that in the relaxed condition the spring is abutted at both sides by a fixed stop of which only one is active during steering, because the slide is compressing the spring away from the other stop at the other side.

Since compressed air is usually available on a semi-trailer, an air spring provides a comparatively light weight solution together with a relatively stiff spring.

In a further preferred embodiment the device according to the invention comprises a speed-sensor that sends a speed signal related to the speed of the semi-trailer to the control means and the control means takes the power of the slide if the speed exceeds a predefined limit. In this way a safe operation of the device is ensured. For instance the speed limit could be set in the order of 10 km or lower.

In a preferred embodiment the device according to the invention comprises means to keep the spring in a compressed state when the slide is powered. In that case the power of the slide need not to overcome the spring action. However this spring action is returned the moment the power is taken off the slide. Then the spring action will return the wheels to a neutral position once the power is taken off the slide. For an air spring these means are deflating/inflating means for deflating the air spring as soon as the slide is powered and inflating the air spring the moment the power is taken off the slide.

The invention will now further be explained referring to the drawings in which:
Figure 1 is a view from below of a preferred embodiment of a device according to the invention;

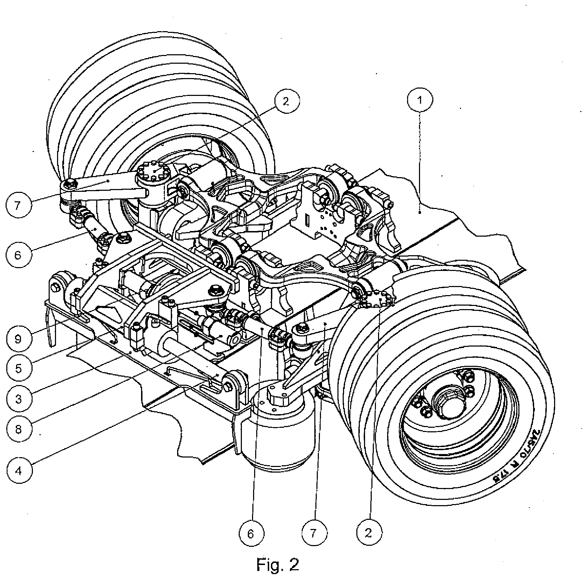

Figure 2 same view as figure 1 but now with a steering angle applied.

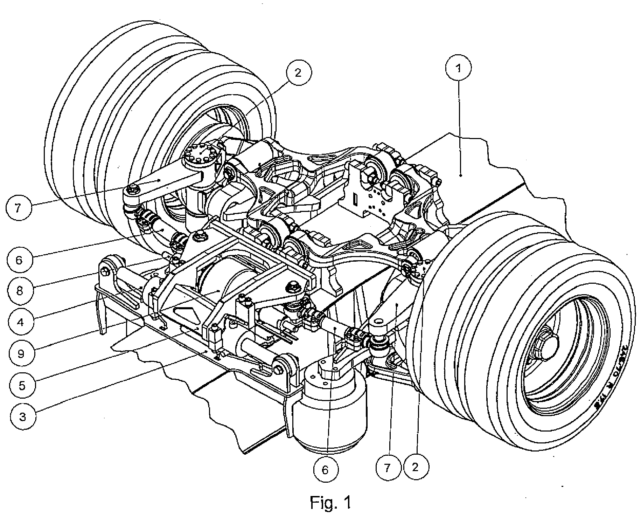

Figure 1 is a view from below of a preferred embodiment of a device according to the invention steering a wheel set of a semi-trailer where the wheel set is connected by means of an independent suspension to the chassis of the semi-trailer notably to a central chassis beam 1 of the semi-trailer. Although there is no physical axle still the wheels shown are usually referred to as belonging to an axle but in this case it is an imaginary axle of the semi-trailer. The wheels are steerable by rotation of steering pivot 2 that can be seen to be offset in the forward direction with respect to the central line of the wheel hub. The forward direction being defined by going in this case towards a lower left side of the figure.

The device for applying a steering angle comprises a base 3 that is attached in a fixed way to the chassis beam 1 and there is a guiding element 4 orientated perpendicular to the longitudinal axes of the chassis beam 1, i.e. of the semi-trailer on which slide 5 is mounted. The movement of slide 5 along guiding element 4 is powered by hydraulic means that themselves are not shown in de drawings. Slide 5 comprises two steering rods 6 each connected at one side of the slide 5 in an articulated connection on one end of the steering rod 6 and the other end being connected to one end of steering arm 7, also in an articulated connection. Steering arm 7 at the other end being fixed to a part of the steering knuckle, in this case the steering pivot 2. The device has been laid out such that the steering rods take an essentially horizontal position during standstill. This is of particular importance with independent suspension of the wheels, because the up and down movement of the wheels during driving has a minimal influence on the wheel camber. A further part of the base 3 is a second guide rail 8, parallel to guiding element 4, along which slide 5 also is able to slide. Guide rail 8 in the middle is provided with an air spring 9 that in its relaxed state is at both sides abutted to end stops that are stationary with respect to the central chassis beam 1 as well as with respect to the base 3. When the slide is powered, then the air spring is being deflated by means that are not shown in the figures. However the same means put the air spring back to its inflated condition the moment the power is taken off the slide, to The control means as well as the operator interface of the device according to the invention are not shown in the drawings.

When now the operator requires a certain amount of steer it provides the appropriate input via the operator interface to the control means which then powers the slide 5 to move and this movement of the slide is transferred via the steering rod to the steering arms to the steering pivots of the wheel set and this will cause the wheels to move to the steer position as shown. When the applied amount of steer is no longer required it is sufficient to input by means of the operator interface that steer is no longer required and the control will take the power off the slide 5 after which the air spring 9 will immediately be inflated and the action of the spring 9 will return slide 5 to its central position and thus the wheels are returned to their neutral straight ahead running position. Thus the operator does not have to perform the steering back to the neutral action because this function is carried out by spring 9.

In case the slide is left unpowered, normal steering action under influence of a centrifugal force is then damped by the presence and action of the air spring 9, avoiding any jitter, which is an additional benefit of this embodiment of the device according to the invention.

For safety purposes a preferred embodiment of the device according to the invention is equipped with a speed sensor that sends a speed signal related to the speed of the semi-trailer to the control means. If the speed exceeds a predefined limit of say 10 km/h, the control means prevents the powering of the slide and thus no steering can be enforced to this shaft other than by centrifugal force.

### List of reference numbers

- 1: chassis beam
- 2: steering pivot
- 3: base
- 4: guiding element
- 5: slide
- 6: steering rod
- 7: steering arm
- 8: guide rail
- 9: air spring

## Claims

1. Device for applying a steering angle to a wheel set of a semi-trailer wherein the wheel set belongs to one axle and is steerable by a castor pivot steering arrangement, comprising a steering knuckle and a pivot steer axle offset towards the front of the semi-trailer with respect to a wheel hub centre line, **characterised in that** the device comprises:
- an base (3) attached to the chassis of the semi-trailer,
- a powered slide (5) connected to the base (3) and arranged to slide along a guiding element (4) of the base in an essentially transverse direction,
- two steering rods (6) that each at one end comprise an articulated connection to the slide (5) and at the opposing end an articulated connection to one end of a steering arm (7) of one of the hubs of the wheel set, the other end of the steering arm (7) having a fixed connection to the steering knuckle,
- control means to control power supplied to the slide (5) to force the slide to move, as well as to control the direction of movement of the slide (5), and
- an operator interface to enable input by a driver to the control means concerning the amount of steer to be applied in magnitude and direction.

2. Device according to claim 1, **characterised in that** the slide (5) is powered by hydraulic power.

3. Device according to claim 1 or 2, **characterised in that** the slide (5) is guided along a guide rail (8), essentially parallel to the guiding element (4), comprising at least one spring (9) that at one end is abutted to the guide rail (8) and at an opposing end is progressively compressed by the slide (5) in relation to the amount of steer applied by the device.

4. Device according to claim 3, **characterised in that** the guide rail (8) comprises one spring (9) that is compressed by the slide at opposing ends at opposing directions of steer applied.

5. Device according to claim 3 or 4, **characterised in that** the spring (9) is an air spring (9).

6. Device according to one of the previous claims, **characterised in that** the device comprises a speed sensor that sends a speed signal related to the speed of the semi-trailer to the control means and that the control means prevents the powering of the slide if the speed exceeds a predefined limit.

7. Device according to one of the previous claims, **characterised in that** the device comprises means to keep the spring (9) in a compressed state when the slide (5) is powered.

## Patentansprüche

1. Einrichtung zum Anwenden eines Steuerwinkels auf ein Rad-Set eines Sattelaufliegers, wobei das Rad-Set zu einer Achse gehört und durch einen Lenkrollensatz, der ein Steuergelenk und eine in Bezug auf eine Radnabenmittellinie zu der Front des Sattelaufliegers hin versetzte Drehsteuerachse aufweist, steuerbar ist, **dadurch gekennzeichnet, dass** die Einrichtung aufweist:
- eine Basis (3), die an dem Chassis des Sattelaufliegers angebracht ist;
- einen angetriebenen Schlitten (5), der mit der Basis (3) verbunden und so angeordnet ist, dass er entlang eines Führungselements (4) der Basis in einer im wesentlichen transversalen Richtung gleitet,
- zwei Steuerstäbe (6), von denen jeder an einem Ende eine Gelenkverbindung zu dem Schlitten (5) und an dem entgegengesetzten Ende eine Gelenkverbindung zu einem Ende eines Steuerarms (7) einer der Naben des Rad-Sets aufweist, wobei das andere Ende eines Steuerarms (7) eine feste Verbindung zu dem Steuergelenk aufweist,
- Steuermittel zum Steuern von Leistung, die dem Schlitten (5) zugeführt wird, um den Schlitten zu zwingen, sich zu bewegen, sowie um die Richtung der Bewegung des Schlittens (5) zu steuern, und
- eine Bedienerschnittstelle, um eine Eingabe durch einen Fahrer an das Steuermittel in Bezug auf den Umfang der anzuwendenden Steuerung im Hinblick auf das Ausmaß und die Richtung zu ermöglichen.

2. Einrichtung gemäß Anspruch 1, **dadurch gekennzeichnet, dass** der Schlitten (5) durch hydraulische Leistung angetrieben wird.

3. Einrichtung gemäß Anspruch 1 oder 2, **dadurch gekennzeichnet, dass** der Schlitten (5) entlang einer zu dem Führungselement (4) im Wesentlichen parallelen Führungsschiene (8), die zumindest eine Feder (9), die an einem Ende an der Führungsschiene (8) anliegt und an einem entgegengesetzten Ende durch den Schlitten (5) im Verhältnis zu dem Umfang der Steuerung progressiv komprimiert wird, aufweist, geführt wird.

4. Einrichtung gemäß Anspruch 3, **dadurch gekennzeichnet, dass** die Führungsschiene (8) eine Feder (9), die bei entgegengesetzten Richtungen der angewandten Steuerung an entgegengesetzten Enden komprimiert wird, aufweist.

5. Einrichtung gemäß Anspruch 3 oder 4, **dadurch gekennzeichnet, dass** die Feder (9) eine Luftfeder (9) ist.

6. Einrichtung gemäß einem der vorangehenden Ansprüche, **dadurch gekennzeichnet, dass** die Einrichtung einen Geschwindigkeitssensor, der ein auf die Geschwindigkeit des Sattelaufliegers bezogenes Geschwindigkeitssignal an das Steuermittel sendet, und dass das Steuermittel das Antreiben des Schlittens verhindert, wenn die Geschwindigkeit ein vorgegebenes Limit überschreitet, aufweist.

7. Einrichtung gemäß einem der vorangehenden Ansprüche, **dadurch gekennzeichnet, dass** die Einrichtung Mittel aufweist, um die Feder (9), wenn der Schlitten (5) angetrieben wird, in einem komprimierten Zustand zu halten.

## Revendications

1. Dispositif pour appliquer un angle de braquage à un train de roues d'une semi-remorque, le train de roues appartenant à un essieu et étant orientable par un agencement de direction à pivotement, comprenant une fusée de direction et un essieu directeur à pivot décalé vers l'avant de la semi-remorque par rapport à une ligne médiane de moyeux de roues, **caractérisé en ce que** le dispositif comprend :
- une base (3) fixée au châssis de la semi-remorque,
- une glissière motorisée (5) reliée à la base (3) et agencée pour glisser le long d'un élément de guidage (4) de la base dans une direction sensiblement transversale,
- deux barres de direction (6) qui, chacune à une extrémité, comprennent une connexion articulée sur la glissière (5) et, à l'extrémité opposée, une connexion articulée sur une extrémité d'un bras de direction (7) d'un des moyeux du train de roues, l'autre extrémité du bras de direction (7) comportant une connexion fixe sur la fusée de direction,
- un moyen de commande pour commander la puissance fournie à la glissière (5) afin d'obliger la glissière à se déplacer, ainsi que pour commander la direction de déplacement de la glissière (5), et
- une interface opérateur pour permettre, à un conducteur, d'entrer dans le moyen de commande la quantité de direction à appliquer en magnitude et en direction.

2. Dispositif selon la revendication 1, **caractérisé en ce que** la glissière (5) est actionnée par énergie hydraulique.

3. Dispositif selon la revendication 1 ou 2, **caractérisé en ce que** la glissière (5) est guidée le long d'un rail de guidage (8), sensiblement parallèle à l'élément de guidage (4), comprenant au moins un ressort (9) qui, à une extrémité, bute sur le rail de guidage (8) et, à une autre extrémité, est progressivement comprimé par la glissière (5) en fonction de la quantité de direction appliquée par le dispositif.

4. Dispositif selon la revendication 3, **caractérisé en ce que** le rail de guidage (8) comprend un ressort (9) qui est comprimé par la glissière aux extrémités opposées, en des directions opposées de la direction appliquée.

5. Dispositif selon la revendication 3 ou 4, **caractérisé en ce que** le ressort (9) est un ressort à air (9) .

6. Dispositif selon l'une des revendications précédentes, **caractérisé en ce que** le dispositif comprend un capteur de vitesse qui envoie un signal de vitesse, lié à la vitesse de la semi-remorque, au moyen de commande et **en ce que** le moyen de commande empêche l'actionnement de la glissière si la vitesse est supérieure à une limite prédéfinie.

7. Dispositif selon l'une des revendications précédentes, **caractérisé en ce que** le dispositif comprend un moyen pour maintenir le ressort (9) dans un état de compression lorsque la glissière (5) est actionnée.
